# EUROPEAN PATENT APPLICATION

(11) **EP 1 734 775 A1**
(43) Date of publication of application: **20.12.2006**
(21) Application number: 05012928.7
(22) Date of filing: 15.06.2005
(51) Int. Cl.: H04Q 7/38

(54) **Back to back dynamic allocation**

(71) Applicant: MATSUSHITA ELECTRIC INDUSTRIAL CO., LTD., Kadoma-shi, Osaka 571-8501 (JP)
(72) Inventor: Cooper, David, Newbury (GB); Dhanda, Mungal, Slough (GB)
(74) Representative: Grünecker, Kinkeldey, Stockmair & Schwanhäusser Anwaltssozietät

(57) **Abstract**

A multiple access communication method, mobile terminal and base station for extended dynamic allocation of uplink Packet Data Channels, referred to as PDCHs. The method comprises the step of transmitting an assignment of at least one of uplink PDCHs and an Uplink Status flag, referred to as USF, the position of a downlink PDCH which contains the USF in a frame indicating the actual availability of a corresponding assigned uplink PDCH in the next frame or group of frames. Further, the multiple access communication monitors downlink PDCHs starting with the lowest numbered assigned PDCH, then the preceding PDCH counting cyclically modulo 8 in the order of decreasing numbered PDCH and transmits all assigned uplink PDCHs, except for the *i-1* highest number assigned PDCHs, when the USF for an assigned uplink PDCH is detected on the *i-th PDCH* so monitored.

## Description

The present invention relates to a multiple access communication method, mobile terminal and base station for extended dynamic allocation of uplink packet data channels, referred to as PDCHs.

The Global System for Mobile Communication (GSM) radio system (and its extension to GPRS) employs "time division duplexing" to ensure that the radio transceiver in the mobile station is not required to transmit and receive simultaneously. This simplifies the design of the radio. This "time division duplexing" is achieved by dividing available time into "time-slots", some of which are assigned for the purpose of radio transmission and some for reception. This patent is particularly concerned with the assignment of timeslots in the GPRS system described in TS 3GPP 43.064 "General Packet Radio Service (GPRS); Overall description of the GPRS radio interface; Stage 2".

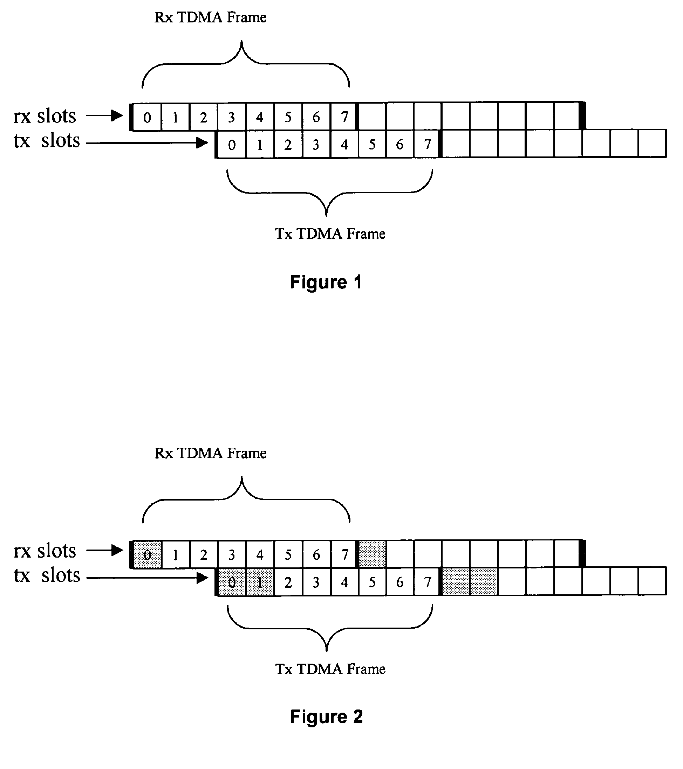

GSM circuit switched telephony employs 8 time-slots per Time Division Multiple Access (TDMA) frame, of which one is used for transmission, one for reception. The slot used for transmission is separated from the slot used for reception by a time interval of three slots (see Figure 1). The figure also illustrates the convention for slot numbering; the numbering of Rx slots and Tx slots ensures that the same "slot number" is used in both downlink and uplink, for example, slot 0.

The GPRS system is an extension of the basic GSM system which is used for "packet switched " communications. It allows an increased data rate during packet data transfer by using more than one timeslot either for transmission or reception. For example, Figure 2 illustrates a GPRS system where, in this particular example, two slots are used for transmission and one for reception. GPRS allows the number of uplink slots and downlink timeslots to vary according to constraints determined by the mobile and the availability of timeslots.

Due to the bursty and discontinuous nature of data transmission it is highly desirable to allow different mobiles to multiplex the use of a given timeslot between different mobiles. GPRS supports this both for uplink or downlink communications.

To allow sharing of the uplink, the base station transmits a "USF" (Uplink State Flag) value on the downlink to indicate which uplink timeslots a given mobile is allowed to transmit on during the next radio block. All interested mobiles decode this value and at most a single indicated mobile is allowed to transmit a given timeslot.

To allow sharing on the downlink, all data sent on a given timeslot is tagged with an address (called TFI, "temporary flow identity") which indicates to which mobile the data is destined. All interested mobiles decode the address in the data and only the addressed mobile uses the data.

There are a number of allocation schemes defined for GPRS, including fixed allocation, dynamic allocation (DA) and extended dynamic allocation (EDA). Of these EDA is the most capable since it permits the network to vary the weighting between transmit/ receive slots from maximum downlink weighting to maximum uplink weighting. The other dynamic allocation scheme, DA, requires the mobile to monitor at least as many downlink slots as it transmits on the uplink, so using DA it cannot transmit more uplink slots than downlink slots, even though the mobile may have hardware capable of such behaviour.

The method of allocating uplink resources in EDA is explained in TS 3GPP 44.060 section 8.1.1.2.1 as follows:
*"The* [assignment] *messages allocate to the mobile station* a *subset of 1 to N PDCHs, where N depends on the MSs multislot class. The mobile station shall monitor its assigned PDCHs starting with the lowest numbered PDCH, then the next lowest numbered PDCH, etc. Whenever the mobile station detects an assigned USF value on an assigned PDCH, the mobile station shall transmit* [...] *on the same PDCH and all higher numbered assigned PDCHs."*

Note that there are two stages involved. First, there is a "configuration" stage in which an "assignment message" allocates to the mobile a subset of PDCHs, while simultaneously assigning a USF value to each of these assigned PDCHs. The USF value is a 3 bit quantity in the range 0-7 and the values assigned to different PDCHs are independent. After this "configuration" stage there is an "operation" stage, in which the mobile station monitors downlink PDCHs in certain timeslots for assigned USF values according to the above rule, and if the correct values are found in the appropriate slots, performs transmissions on uplink PDCHs according to the above rule.

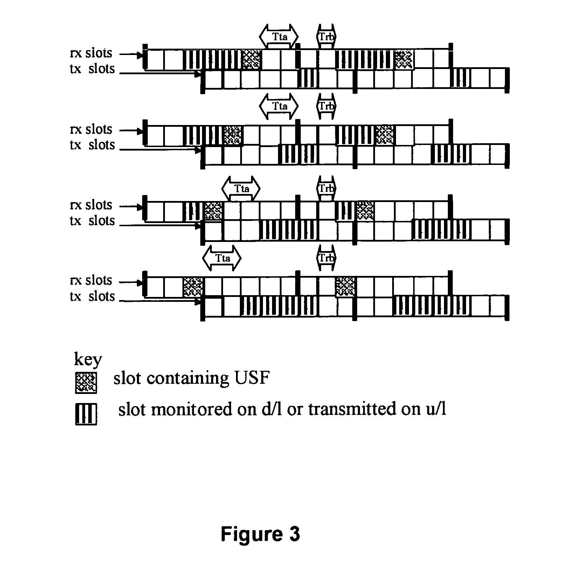

An example of the assignment for a single class 12 mobile (Tx+Rx=5, max Tx=4, max Rx=4) is shown in Figure 3. The figure illustrates the slot in which an appropriate USF value is sent on the downlink, and the consequent transmission on the uplink.

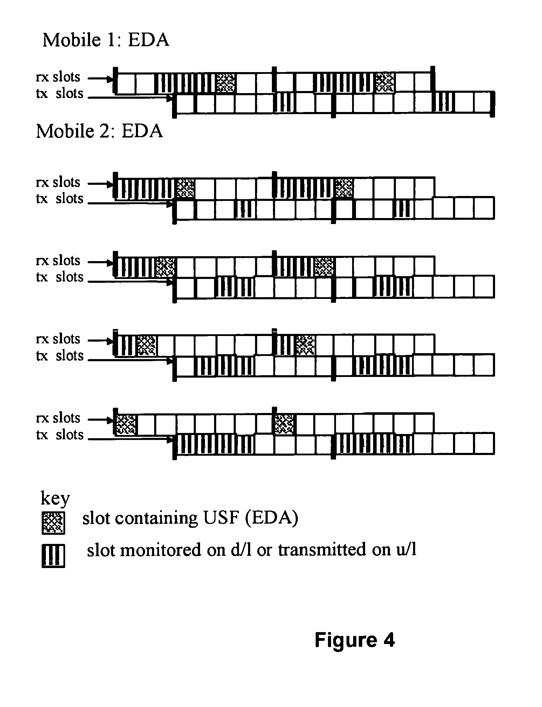

Figures 4-6 illustrates why this is sometimes inefficient. In this illustration the network needs to share allocated slots between two class 12 mobiles, MS1 and MS2, both of which are capable of using up to 4 slots in the downlink or uplink (the example applies equally to both downlink and uplink) where EDA and EDA are combined between two mobiles.

In figure 4, mobile 1 uses EDA with one transmit slot, whereas mobile 2 is permitted to transmit on up to four assigned uplink PDCHs. Note that depending on the position of the slot containing the USF, the lowest number assigned uplink PDCH has the same position.

In figure 5, mobile 1 uses EDA with two transmit slots, which still allows that mobile 2 has up to four assigned uplink PDCHs depending on the position of the USF.

In figure 6, mobile 1 uses EDA with three transmit slots, which results that mobile 2 is completely blocked to transmit even one assigned uplink PDCH as slot three on uplink is already used by mobile one. Moreover, the USF received on slot 3 for mobile 1 blocks the reception of the USF on this slot resulting in a further conflict as both mobiles would receive the USF on downlink slot 3.

The object underlying the invention is consequently to increase the statistical multiplexing efficiency of resource allocation on both the uplink and downlink during bursty packet data flows. A further object of the invention is to increase the flexibility of assigning uplink resources to a plurality of mobile stations in the network sharing a radio frame.

This object is solved by a method as set forth in claims 1 and 5. Moreover, the object is solved by a mobile station and a base station as set forth in the respective independent claims.

The concept underlying the invention is to allow the direction in which allocation grows be either upwards or downwards with respect to the timeslot numbering, thus permitting configurations have either 'back to back' allocations or allocations that grow towards each other.

The benefit is likely to be greatest when a number of mobiles potentially have simultaneous requirements for dynamically allocated uplink resources, and uplink resources are limited due to the volume of traffic. An example situation might be if two mobiles are simultaneously requesting a web page download, or simultaneously servicing requests for data upload.

The invention will be understood from the following detailed description of preferred embodiments of the invention with reference to the accompanying figures:
- **Figure 1**: shows a receive and transmit TDMA frame in circuit switched operation;
- **Figure 2**: shows a receive and transmit TDMA frame in GPRS operation;
- **Figure 3**: shows a conventional allocation scheme for a single class 12 mobile assignment R1T4;
- **Figure 4**: shows a conventional EDA allocation scheme for two mobiles, where one mobile uses EDA with TX1;

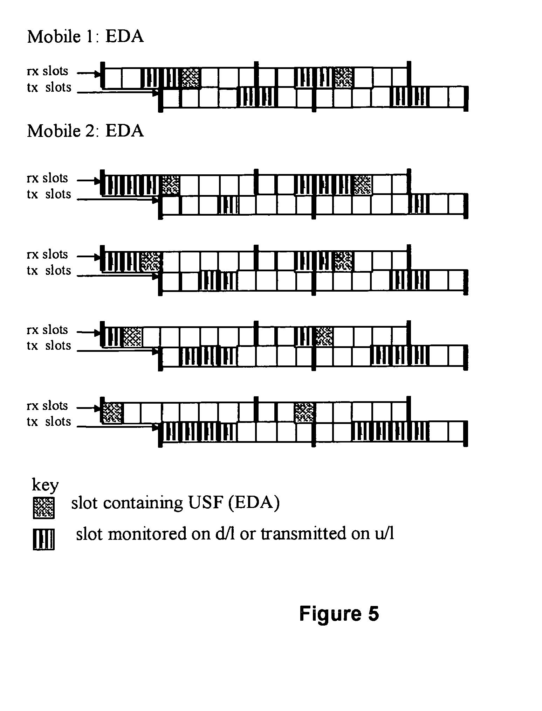

- **Figure 5**: shows a conventional EDA allocation scheme for two mobiles, where one mobile uses EDA with TX2;

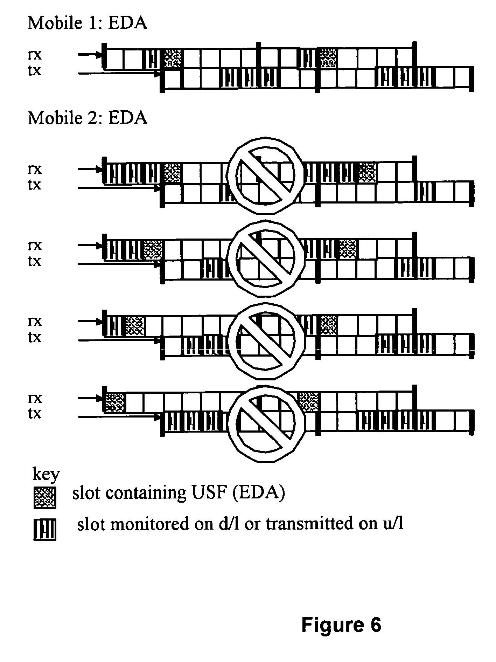

- **Figure 6**: shows a conventional EDA allocation scheme for two mobiles, where one mobile uses EDA with TX3;

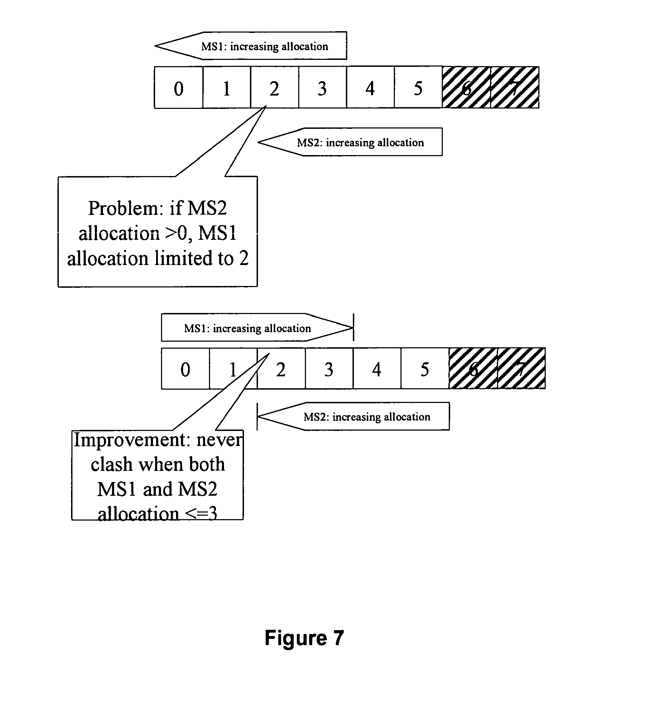

- **Figure 7**: illustrates the concept underlying the invention compared with the conventional allocation scheme for a class 12 mobile with 6 slots available and two slots used for other purposes;

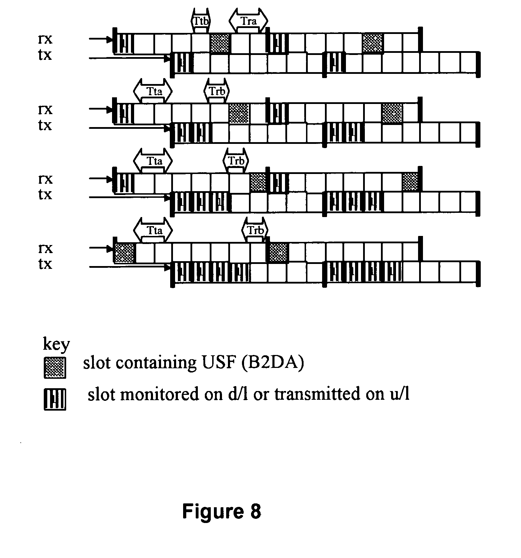

- **Figure 8**: shows an illustration of the allocation scheme according to the invention for a single class 12 mobile assignment R1T4;

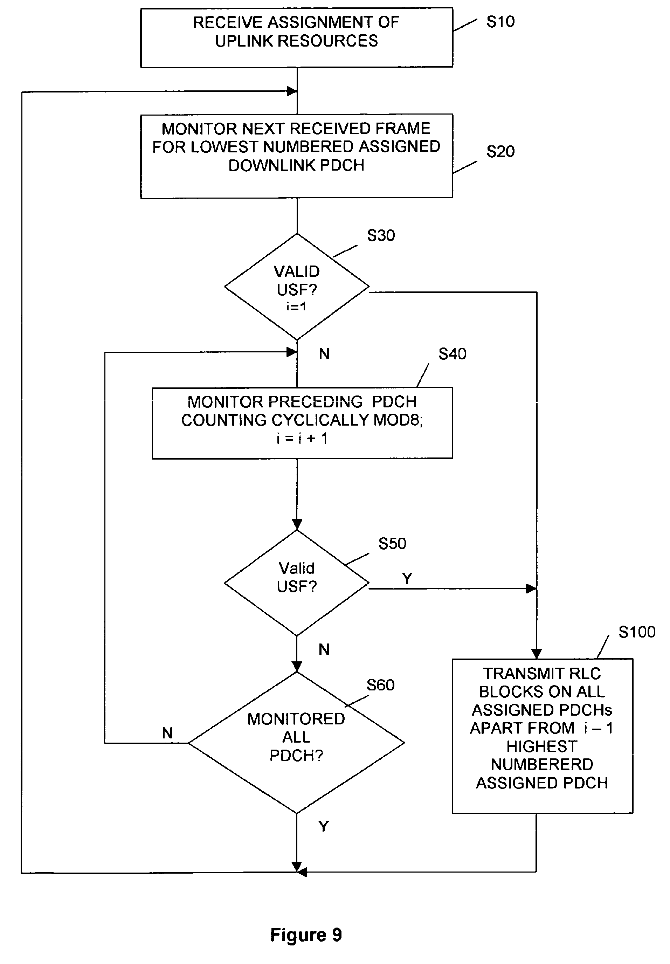

- **Figure 9**: shows a flowchart illustrating the steps at the mobile to carry out the method according to the invention;

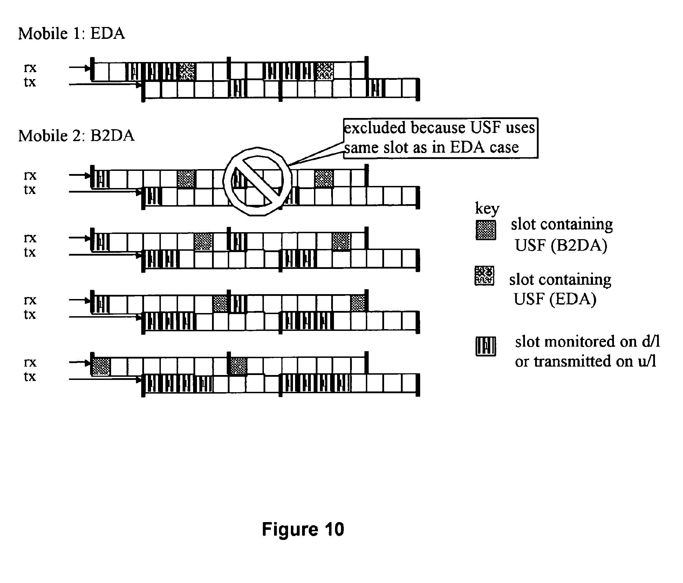

- **Figure 10**: shows a mixed allocation scheme for two mobiles with one mobile using EDA with TX1 and the other mobile using B²DA;

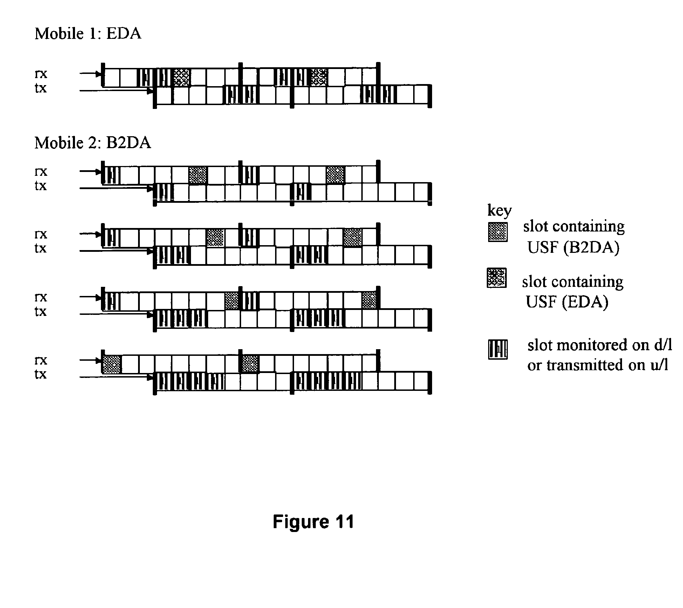

- **Figure 11**: shows a mixed allocation scheme for two mobiles with one mobile using EDA with TX2 and the other mobile using B²DA;

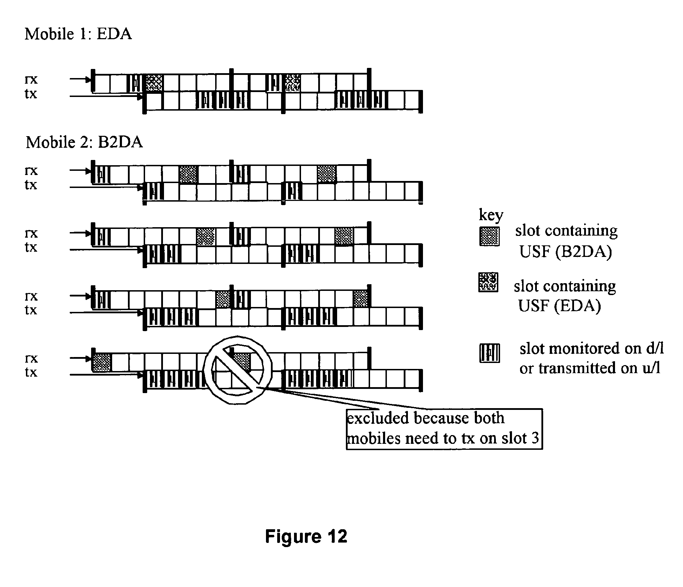

- **Figure 12**: shows a mixed allocation scheme for two mobiles with one mobile using EDA with TX3 and the other mobile using B²DA;

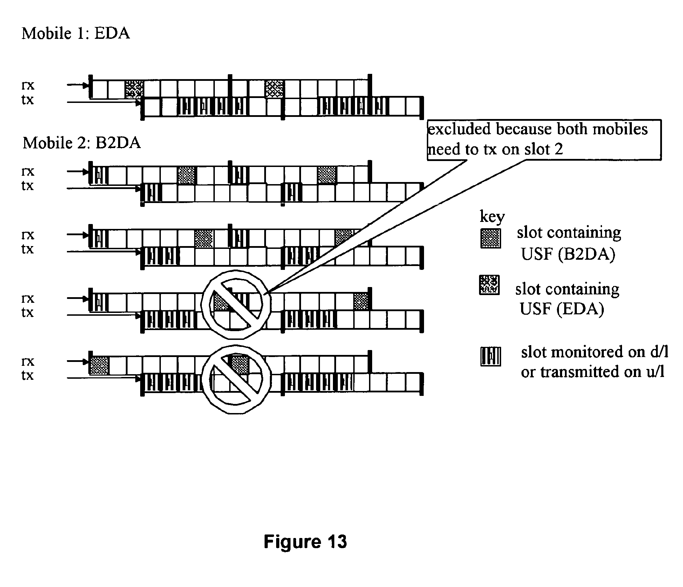

- **Figure 13**: shows a mixed allocation scheme for two mobiles with one mobile using EDA with TX4 and the other mobile using B²DA;

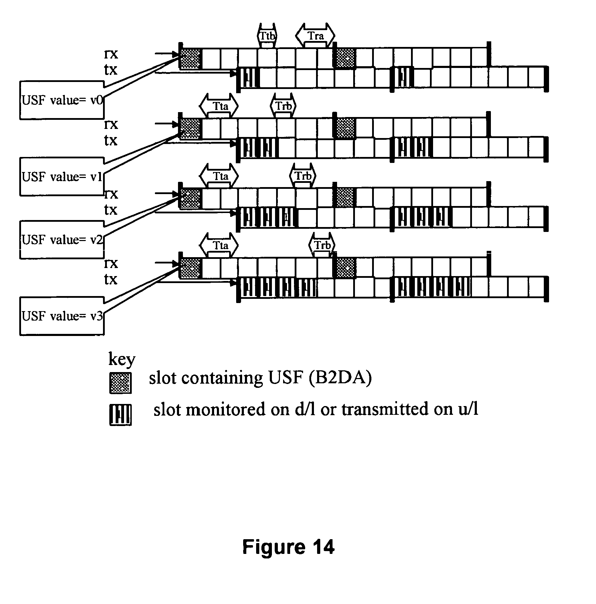

- **Figure 14**: illustrates a second embodiment of the method according to the invention illustrating an allocation scheme for a single last 12 mobile assignment R1T4;

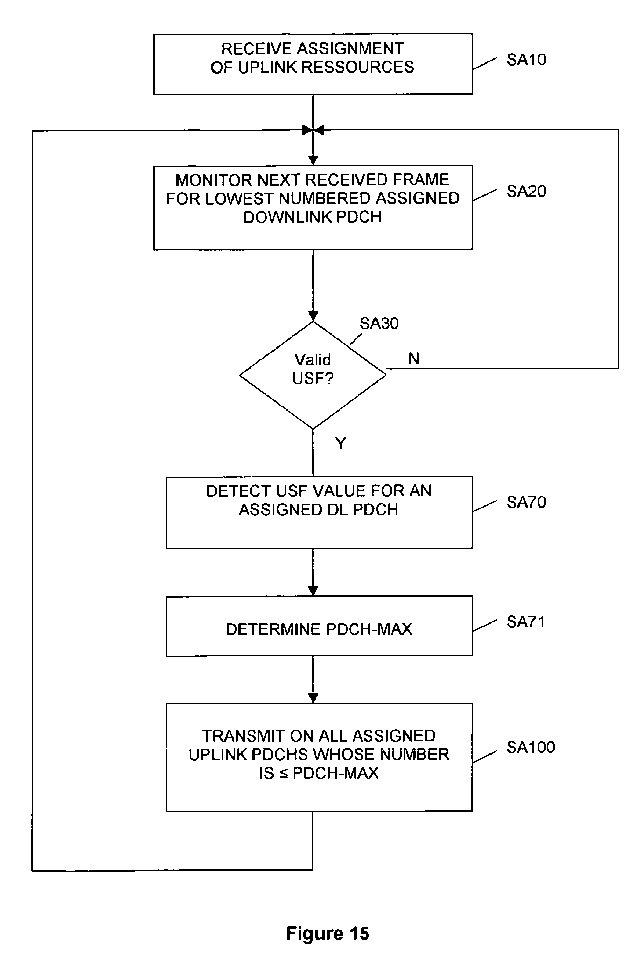

- **Figure 15**: shows a flowchart illustrating the operational steps at the mobile station to carry out the method of the invention according to the second embodiment;

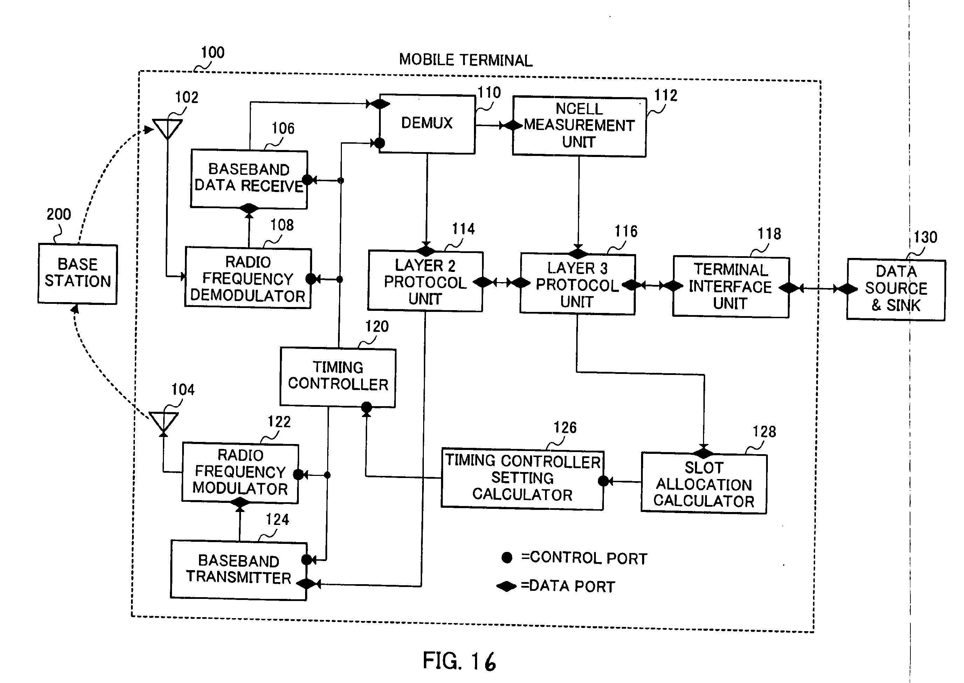

- **Figure 16**: shows the structure of a mobile terminal adapted to carry out the invention; and

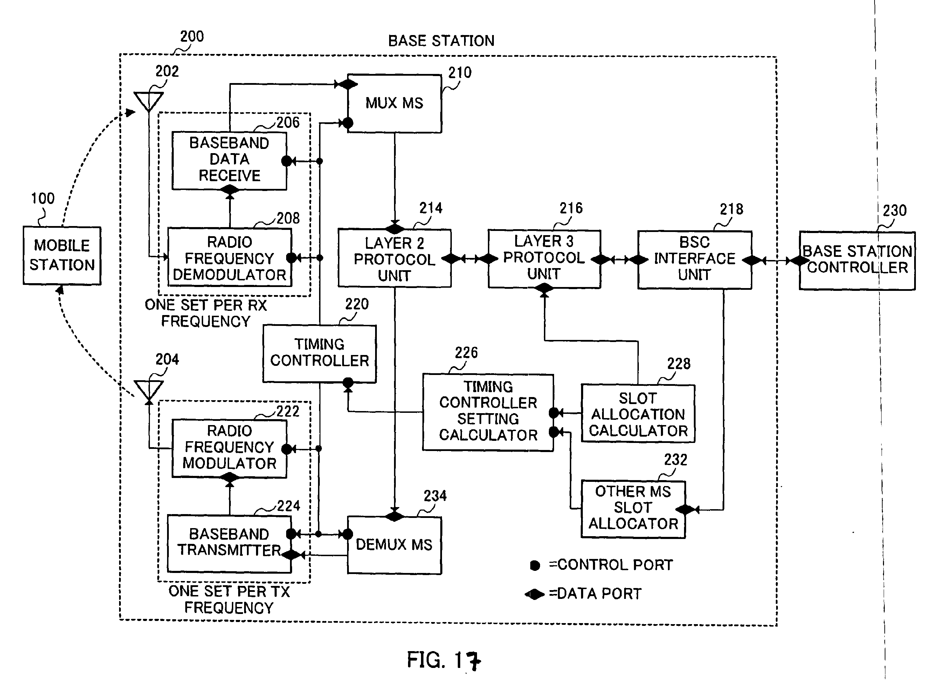

- **Figure 17**: illustrates the operational units of a base station adapted to carry out the invention.

An illustration of the invention is shown in the upper part of figure 7, where it is assumed that only slots 0-5 are available for allocation and slots 6, 7 are being used for other mobiles.

There is the following problem with EDA that limits its efficiency when sharing resources between different mobiles. The problem is that dynamic allocation can only grow "backwards", i.e. if the potentially transmitted slots are in the range [*N*, *M*], where 0≤ *N*≤ *M*≤ 7, then for slot k to be transmitted, all higher numbered slots (i.e. slots *k+1, k+2,... M*) must also be transmitted.

Then using EDA, a 'fair' allocation might be to give MS1 an allocation starting at slot 0, and MS2 an allocation starting at slot 2. This is shown in the top illustration. With such an allocation it is certain the MS1 can transmit at least 2 timeslots without blocking or being blocked by MS2. Also, both MS's can potentially transmit 4 slots, which is their maximum capability since they are class 12 mobiles. But note that if MS2 transmits even one slot, then MS1 cannot transmit more then 2 slots without mutual blocking.

In the second part of figure 7, the concept of the invention is shown referred to as Back to Back Dynamic Allocation (B²DA). It will be appreciated that allocation can proceed in an upward direction for some mobiles, but continue in the downward direction for other mobiles as in the existing standards.

It is easily seen that using this approach the likelihood of one mobile blocking the transmissions of the other is reduced; indeed in the example shown, provided both mobiles have three or less slots allocated they cannot block each other. However the number of timeslots available has not been increased; all that is done is to use them more efficiently.

For B2DA the method of allocation is proposed as follows which is illustrated in figure 8: The mobile station shall monitor PDCHs starting with the lowest numbered assigned PDCH, then the preceding numbered PDCH, counting cyclically modulo 8 and so on in the order of decreasing numbered PDCH (counting cyclically modulo 8). If the mobile station detects an assigned USF value for an assigned PDCH on the i'th PDCH so monitored (i=1,2...), the mobile station shall transmit RLC/MAC blocks on all assigned PDCHs apart from the i-1 highest numbered assigned PDCHs.

It is noted that the PDCHs monitored for USF according to this rule are not in general assigned (apart from the 1 st such PDCH). Further, "counting cyclically modulo 8" implies that that 0 is the preceding number of 1, 1 is the preceding number of 2, and so on until 7 which precedes 0.

In the illustration of figure 8, 4 uplink PDCHs are assigned, from slot 0 to slot 3. Therefore in this example the 'lowest numbered assigned PDCH' is 0 and the highest numbered assigned PDCH is 3. Starting from PDCH 0, the preceding PDCHs (counting cyclically modulo 8) are 7, then 6, then 5 etc.

Figure 9 shows a sequence of operational steps carried out the mobile station to perform the allocation scheme according to the invention. In step S10, the mobile station receives an assignment of uplink resources from the network during a configuration stage. The assignment message allocates a subset of PDCHs of a TDMA frame to the mobile, while simultaneously assigning a USF value to each of these assigned PDCHs.

In step S20, the mobile station monitors the downlink PDCHs of a received TDMA frame for the lowest numbered assigned downlink PDCH. In step S30, the USF contained in the so-detected lowest numbered assigned PDCH is retrieved and it is checked whether the USF constitutes a valid value as indicated during the configuration stage. During that time, a counter i is set to 1. In case the lowest numbered assigned downlink PDCH does not contain a valid USF, the mobile station continues to monitor the next preceding PDCH, thereby counting cyclically modulo 8 in decreasing order. Further, counter i is increased by 1 (step S40). In step S50, it is again checked whether the actually monitored downlink PDCH contains a valid USF. If no valid USF is found, the mobile station continues in step S60 to monitor the next preceding PDCH until all assigned downlink PDCH are monitored. At that time, the flowchart returns to step S20 and receives the next radio frame.

If in either step S30 or step S50, a valid USF is found, the mobile proceeds with step S100 and transmits data blocks on all assigned PDCHs apart from *i-1* highest numbered assigned PDCH(s). Thus, counter i, which is constantly increased with each monitoring step S40 determines effectively the number of assigned uplink PDCH(s).

In order that uplink resources can be allocated using dynamic allocation via the USF, two conditions must apply. First, the uplink resources are not also used by another mobile, since only one mobile can transmit on a given slot.

Further, the downlink slot on which the USF is required to be transmitted, in order to allocate the desired uplink resources, it must not be required to transmit the USF for another mobile, since only one USF value is transmitted per downlink slot.

In the following it is shown that B²DA and EDA can co-exist and produce performance gains compared with homogenous allocations just using EDA, although some combinations are shown not to be possible. In fact, the following combinations are possible, by combining EDA and B²DA:

Table 1 shows permissible combinations of tx slots when two mobiles co-exist, wherein mobile 1 uses EDA and mobile 2 using B²DA.

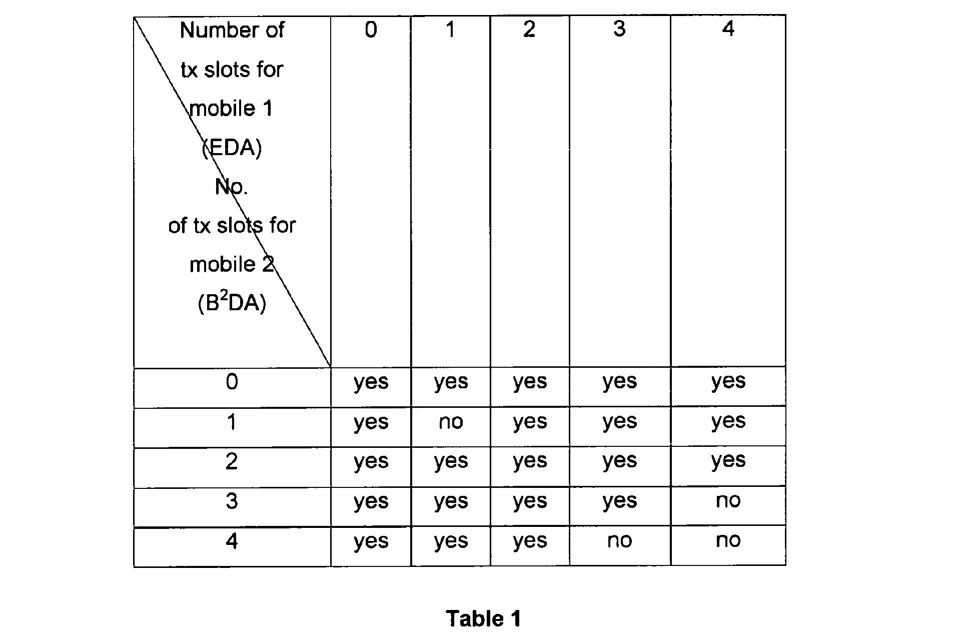

Note that very efficient uplink allocation is possible as, for example, both mobiles can simultaneously transmit 3 slots, or one of them can transmit 4 slots, while the other transmits 2 slots. Figures 10-13 illustrate configurations where EDA and B²DA are combined.

However, if EDA can only be combined with EDA, then only the combinations as listed in Table 2 are possible. As can be seen, if mobile 1 transmits 3 or more slots, mobile 2 cannot transmit any slots, and visa versa.

Table 2 indicates permissible combinations of tx slots when two mobiles co-exist, mobile 1 using EDA and "mobile 2" using EDA (refer also to figures 4-6).

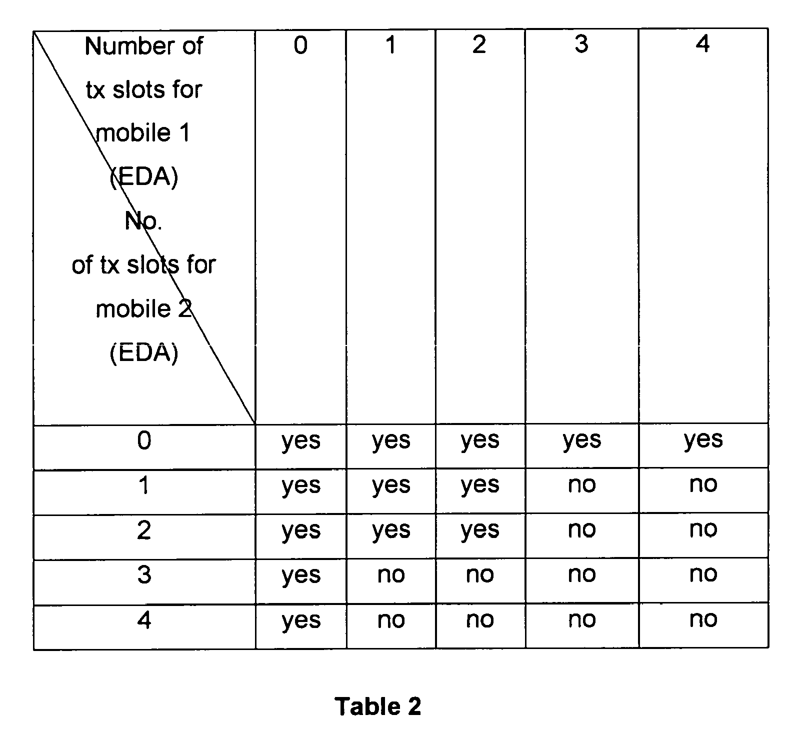

In conclusion, by suitable combinations with EDA, the use of B²DA can provide superior sharing of the uplink than can be achieved with homogeneous EDA allocation schemes. The following figures shown detailed examples of the situation described above, where two mobiles are sharing slots 0-5.

A second embodiment of the invention is obtained when instead of the base station sending the USF on different timeslots to indicate the availability of uplink slots for transmission, the USF could always be transmitted on the lowest numbered assigned downlink slot and different values of the USF could indicate the availability of uplink slots (provided that different values of the USF are associated with each assigned uplink slot in the assignment message). This is not considered to be as robust a solution as in the first embodiment of the invention since the number of USF values is limited: the USF is a 3 bit flag so only 8 values are available, and the greater the proportion of possible values is used, the more likely is the mobile station to make a decoding error.

According to this embodiment, the mobile station shall monitor the lowest numbered assigned PDCH for a USF. If the mobile station detects an assigned USF value for an assigned PDCH, the mobile station shall transmit RLC/MAC blocks on all assigned PDCHs whose number is less than or equal to any PDCH assigned the USF value so detected.

Normally, it is expected that each uplink PDCH would be assigned a different USF value when the assignment message is sent. But if more than one PDCH is assigned the same USF value, the above steps ensure that all such PDCHs up to the highest numbered PDCH assigned that USF value would be transmitted.

In figure 14, the method is illustrated assuming USF values v0,v1,v2,v3 are assigned for PDCH on timeslots 0,1,2,3 respectively. Note that the lowest numbered assigned PDCH is on slot 0, and the highest assigned PDCH is on slot 3.

Figure 15 shows a flowchart of operational steps carried out at the mobile station for the second embodiment of the method according to the invention. The steps having a similarity to those shown with regard to the first embodiment illustrated in figure 9 have been indicated with the same numbers.

In step SA10, the mobile receives an assignment of uplink resources from the network. In step SA20, the mobile monitors the received radio frame for the lowest numbered assigned downlink PDCH. If a valid USF is found in SA30, that is to say a USF value assigned to at least one of the assiged PDCHs, the USF value of that assigned downlink PDCH is detected in step SA70. In following step SA71, if more than one PDCH has the same USF value assigned to it, the highest numbered PDCH that has the detected USF value assigned to it is determined and recorded as a variable PDCH-MAX. If only one unique PDCH has the detected USF value assigned to it, its number is recorded as PDCH-MAX. If no valid USF is detected in SA30, the process proceeds with repeating step SA20 for the next received TDMA frame.

The USF value detected in step SA70 is used to determine the number of assigned uplink PDCHs. More specifically, the mobile is allowed to transmit on all assigned uplink PDCHs, whose number is less or equal to PDCH-MAX determined in step SA71. in step SA100. Thereafter, the flowchart proceeds with repeating step SA20.

Figure 16 is a block diagram for a mobile station MS1 which is adapted to carry out the present invention.

A mobile station (wireless data communication terminal) 100 allows the bi-directional transfer of data between a base station 200 and an external data source and sink 130.

The base station 200 transmits GPRS signals to the mobile station 100. The GPRS signals are received on the receive antenna 102, and are demodulated to baseband ones by a radio frequency demodulator 108. The radio frequency demodulator 108 delivers the baseband signals to a baseband data receiver 106. The baseband data receiver 106 delivers the received baseband data to a demultiplexer 110. The demultiplexer 110 selects either an NCELL measurement unit 112 or a Layer 2 protocol unit 114 to process the above data, depending on its control input from a timing controller 120.

If the downlink baseband data is destined for the NCELL measurement unit 112, this unit performs adjacent cell signal level measurement, and transmits the resulting information to a Layer 3 protocol unit 116. The Layer 3 protocol unit 116 in turn transmits the data to the base station 200 via the uplink.

Downlink baseband data to be used for adjacent cell signal level measurement is routed to the Layer 3 protocol unit 116. The Layer 3 protocol unit 116 separates user plane data and control plane data. The user data is sent to a terminal interface unit 118. The terminal interface unit 118 sends the data to an external data source and sink 130.

Control plane data is used to perform internal control functions. In particular, any GPRS slot allocation frames sent from the base station 200 are used to send parameter data to a slot allocation calculator 128. The slot allocation calculator 128 calculates which TDMA slots shall be used for data reception, data transmission, and adjacent cell signal level measurement purposes. This information is sent to a timing controller setting calculator 126. The timing controller setting calculator 126 in turn reconfigures a timing controller 120 so as to perform each operation of receive preparation, transmit preparation, and adjacent cell signal level measurement at the correct time.

The timing controller 120 is responsible for determining and controlling the timing of the transmission and reception of signals toward the base station 200, and the reception of measurement data. Moreover, the controller performs the monitoring operation for assigned downlink PDCHs and to detect the assigned USF value. In accordance with the calculation result of the slot allocation calculator 128, the timing controller 120 controls the precise timing and behavior of the radio frequency modulator 122, radio frequency demodulator 108, baseband data receiver 106, baseband transmitter 124, and demultiplexer 110.

User data transmitted from an external data source and sink 130 is accepted by a terminal interface unit 118, and given to a Layer 3 protocol unit 116. The Layer 3 protocol unit 116 multiplexes the data with any protocol control data, and transmits it via a Layer 2 protocol unit 114. The Layer 2 protocol unit 114 in turn transmits the multiplexed data to a baseband transmitter 124. Subsequently, the multiplexed data is modulated by a radio frequency modulator 122, and then is transmitted over a transmit antenna 104.

Figure 17 is a block diagram for a base station which is adapted to carry out the present invention.

A wireless base station 200 allows the bi-directional transfer of data between a plurality of mobile stations 100 and an external base station controller (BSC: Base Station Controller) 230.

Each mobile station 100 transmits precisely-timed GPRS signals to the base station 200. The GPRS signals are received on the receive antenna 202, and are demodulated to baseband ones by a radio frequency demodulator 208. The radio frequency demodulator 208 delivers the baseband signals to a baseband data receiver 206. If multiple receive frequencies are used, there is one set of radio frequency demodulator 208 and baseband data receiver 206 per frequency. The baseband data receiver 206 delivers the received baseband data to a multiplexer MS 210. The multiplexer MS 210 marks which MS the data has arrived from depending on its control input from a timing controller 220, and forwards all data including the countdown value received from MS 100 to Layer 2 protocol unit 214. The Layer 2 protocol unit 214 maintains a separate context for each mobile station 100.

Downlink baseband data to be used for adjacent cell signal level measurement is routed to the Layer 3 protocol unit 216. The Layer 3 protocol unit 216 maintains a separate context for each mobile station 100. The Layer 3 protocol unit 216 separates user plane data and radio resource control plane data. User data and radio resource control plane data is sent to a BSC interface unit 218. The BSC interface unit 218 sends the data to an external Base Station Controller 230.

Radio resource control plane data is used to perform internal control functions. In particular, a slot allocation calculator 228 calculates, typically according to the required data rate, which GPRS slots are allocated for each mobile station 100. This information is sent to the Layer 3 protocol unit 216. The Layer 3 protocol unit 216 sends allocation information to the mobile station 100. This information is also sent to a timing controller setting calculator 226. In addition, other MS slot allocator 232 receives necessary data from the external Base Station Controller 230 via the BSC interface unit 218, and calculates allocation information for other mobile stations. This information is also sent to the timing controller setting calculator 226. The timing controller setting calculator 226 in turn reconfigures a timing controller 220 so as to perform each of receive and transmit actions towards each mobile station 100 at the correct time.

The timing controller 220 is responsible for determining and controlling the timing of the transmission and reception of signals toward the mobile station 100. In accordance with the calculation result of the slot allocation calculator 228, the timing controller 220 controls the precise timing and behavior of the radio frequency modulator 222, radio frequency demodulator 208, baseband data receiver 206, baseband transmitter 224, multiplexer MS 210, and demultiplexer MS 234.

User data and control data transmitted from a Base Station, Controller 230 is accepted by a BSC interface unit 218, and given to a Layer 3 protocol unit 216. The Layer 3 protocol unit 216 multiplexes the data with any radio resource control data, and transmits it via a Layer 2 protocol unit 214. The Layer 2 protocol unit 214 in turn transmits the multiplexed data to a 15 demultiplexer MS 234. The demultiplexer MS 234 provides the data for each mobile station 100 on the correct TDMA slot to the correct baseband transmitter 224. Subsequently, the data is modulated by a radio frequency modulator 222, and then is transmitted over a transmit antenna 204. If multiple transmit 20 frequencies are used, there is one set of radio frequency modulator 222 and baseband data transmitter 224 per frequency.

## Claims

1. A multiple access communication method for extended dynamic allocation of uplink Packet Data Channels, referred to as PDCHs, comprising the steps of:
transmitting an assignment of at least one of uplink PDCHs and an Uplink Status flag, referred to as USF, the position of a downlink PDCH which contains the USF in a frame indicating the actual availability of a corresponding assigned uplink PDCH in the next frame or group of frames;
monitoring downlink PDCHs starting with the lowest numbered assigned PDCH, then the preceding PDCH counting cyclically modulo 8 in the order of decreasing numbered PDCH; and
transmitting on all assigned uplink PDCHs, except for the *i-1* highest number assigned PDCHs, when the USF for an assigned uplink PDCH is detected on the *i-th PDCH* so monitored.

2. The method according to claim 1, wherein the step of transmitting an assignment includes assigning to a mobile station a subset of PDCHs of a radio frame and assigning a USF value to each of the assigned PDCHs.

3. The method according to claim 2, wherein the USF values assigned to different PDCHs are different.

4. The method according to one of claims 1 to 3, wherein the uplink PDCH assignment for a first mobile does not interfere with an uplink PDCH assignment according to an extended dynamic allocation scheme for a second mobile sharing one radio frame.

5. A multiple access communication method for extended dynamic allocation of uplink Packet Data Channels, referred to as PDCHs, comprising the steps of:
transmitting an assignment of at least one of uplink PDCHs and an Uplink Status flag, referred to as USF, the position of a downlink PDCH which contains the USF in a frame in conjunction with the value of the USF indicating the actual availability of a corresponding assigned uplink PDCH in the next frame or group of frames;
monitoring the lowest numbered assigned downlink PDCH for a USF; and
transmitting on all assigned uplink PDCHs, whose number is less than or equal to any PDCH assigned the USF value so detected.

6. The method according to claim 5, wherein more than one PDCH is assigned the same USF value.

7. The method according to cliam 5 and 6, wherein the highest numbered PDCH that has the detected USF value assigned to it determines a variable PDCH-MAX and transmission is effected for all uplink PDCHs, whose number is less than or equal to PDCH-MAX.

8. The method according to one of claims 1 to 7, wherein the uplink PDCH assignment is for a class 12 mobile station, wherein a maximum of four PDCHs are assigned for uplink or downlink.

9. The method according to one of claims 1 to 8, wherein all assigned uplink PDCHs are consecutively arranged in a TDMA frame.

10. The method according to one of claims 1 to 9, wherein a PDCH corresponds to a time slot of a TDMA frame and eight consecutive time slots form a radio frame.

11. A mobile terminal in a multiple access communication system for extended dynamic allocation of uplink Packet Data Channels, referred to as PDCHs, said terminal comprising:
reception means (106, 108) receiving an assignment of at least one of uplink PDCHs and an Uplink Status flag, referred to as USF, the position of a downlink PDCH which contains the USF in a frame indicating the actual availability of a corresponding assigned uplink PDCH in the next frame or group of frames;
means (120) for monitoring downlink PDCHs starting with the lowest numbered assigned PDCH, then the preceding PDCH counting cyclically modulo 8 in the order of decreasing numbered PDCH; and
transmission means (122, 124) for transmitting on all assigned uplink PDCHs, except for the *i-1* highest number assigned PDCHs, when the USF for an assigned uplink PDCH is detected on the *i-th PDCH* so monitored.

12. A mobile terminal in a multiple access communication system for extended dynamic allocation of uplink Packet Data Channels, referred to as PDCHs, said terminal comprising:
reception means (106, 108) for receiving an assignment of at least one of uplink PDCHs and an Uplink Status flag, referred to as USF, the position of a downlink PDCH which contains the USF in a frame in conjunction with the value of the USF indicating the actual availability of a corresponding assigned uplink PDCH in the next frame or group of frames;
means (120) for monitoring the lowest numbered assigned downlink PDCH for a USF; and
transmission means (122, 124) for transmitting on all assigned uplink PDCHs, whose number is less than or equal to any PDCH assigned the USF value so detected.

13. A base station in a multiple access communication system for extended dynamic allocation of uplink Packet Data Channels, referred to as PDCHs, said base station comprising:
transmission means (222, 224) for transmitting an assignment of at least one of uplink PDCHs and an Uplink Status flag, referred to as USF, the position of a downlink PDCH which contains the USF in a frame indicating the actual availability of a corresponding assigned uplink PDCH in the next frame or group of frames; and
reception means (206, 208) for receiving from a mobile station data blocks, which have been allocated in accordance with the method according to claims 1-10.
